# EUROPÄISCHE PATENTSCHRIFT

(11) **EP 2 884 089 B1**
(45) Veröffentlichungstag und Bekanntmachung des Hinweises auf die Patenterteilung: **25.04.2018**
(21) Anmeldenummer: 14195782.9
(22) Anmeldetag: 02.12.2014
(51) Int. Cl.: F02M 51/06, F15B 3/00, H02N 2/04

(54) **Hydraulischer Koppler**
Hydraulic coupler
Coupleur hydraulique

(30) Priorität: 10.12.2013 DE 102013225379
(43) Veröffentlichungstag der Anmeldung: 17.06.2015
(73) Patentinhaber: ROBERT BOSCH GMBH, 70442 Stuttgart (DE)
(72) Erfinder: Ohlhafer, Olaf, 74391 Erlingheim (DE); Tchikango Siagam, Adeline, 70197 Stuttgart (DE)

(56) Entgegenhaltungen:
- EP-A2- 0 289 876
- WO-A1-00/65235
- WO-A1-02/077457
- WO-A1-03/038269
- US-A- 2 505 198
- US-A- 3 514 017
- US-A- 3 908 512
- US-A- 4 048 905

## Beschreibung

Die Erfindung betrifft einen hydraulischen Koppler aufweisend einen mit einem Aktor zusammenwirkenden Stellkolben und einem über einen fluidgefüllten, in einem Kopplergehäuse angeordneten Kopplerraum mit dem Stellkolben über ein einstellbares Übersetzungsverhältnis zusammenwirkenden Betätigungskolben. Weiterhin betrifft die Erfindung ein Verfahren zum Betreiben eines derartigen hydraulischen Kopplers.

### Stand der Technik

Ein derartiger hydraulischer Koppler und ein derartiges Verfahren zum Betreiben eines hydraulischen Kopplers ist aus der DE 10 2007 002 278 A1 und aus der WO03/038269 A1 bekannt.

Dieser hydraulische Koppler ist Teil eines Kraftstoffinjektors und weist einen Aktor auf, der mit einem Stellkolben zusammenwirkt. Der Stellkolben taucht in einen fluidgefüllten und in einem Kopplergehäuse angeordneten Kopplerraum ein, wobei eine Verstellbewegung des Stellkolbens von dem Hydraulikfluid auf einen ebenfalls in den Kopplerraum hinein ragenden Betätigungskolben übertragen wird. Der Betätigungskolben weist auf der dem Koppler zugewandten Seite ein Ringelement auf, das im Ruhezustand auf einem Ringabsatz des Betätigungskolbens aufliegt. Das Ringelement ist relativ zu dem Betätigungskolben auf dem Ringabsatz verschiebbar, wodurch das Übersetzungsverhältnis des hydraulischen Kopplers in zwei fest definierte, unterschiedliche Übersetzungsverhältniskennwerte einstellbar ist. Konische Kolben sind in anderen technischen Gebieten an sich bekannt, z.B. aus den Druckschriften WO02/077457 A1, US2505198 A1, WO00/65235 A1, US3514017 A1, US3908512 A1, EP0289876 A2 und US4048905 A1. Der Erfindung liegt die Aufgabe zugrunde, einen hydraulischen Koppler bereitzustellen, der hinsichtlich seiner Funktion verbessert ist.

### Offenbarung der Erfindung

### Vorteile der Erfindung

Diese Aufgabe wird durch einen hydraulischen Koppler gemäß Anspruch 1 und durch ein Verfahren gemäß Anspruch 10 gelöst. Dieser Ausgestaltung beziehungsweise diesem Verfahren liegt die Erkenntnis zugrunde, dass bei Systemen, bei denen hydraulische Koppler zur Kraftverstärkung eingesetzt werden, nicht während des gesamten Verstellweges des hydraulischen Kopplers der gleiche Kraftbetrag benötigt wird. Bei diesen Anwendungen ist es überwiegend so, dass zur Einleitung eines von einem Aktor ausgelösten und von dem Betätigungskolben auf ein Stellglied übertragenen Bewegung deutlich mehr Kraft benötigt wird, als dies nach Einleitung der Verstellbewegung der Fall ist. Dabei kann die notwendige Kraft mit zunehmender Verstellbewegung linear oder nicht linear abnehmen. Dieser Tatsache wird durch die erfindungsgemäße Ausgestaltung des Kopplers Rechnung getragen. Im Ergebnis kann dadurch von dem Aktor aufzubringende Energie eingespart werden, indem nur die notwendige Kraft zur Verfügung gestellt wird, die auch tatsächlich zur Darstellung der entsprechenden Bewegung benötigt wird. Somit wird die Effizienz des Gesamtsystems gesteigert. Weiterhin ist der Stellkolben und/oder der Betätigungskolben an dem mit dem Kopplerraum zusammenwirkenden Bereich umfangsveränderlich, wobei der umfangsveränderliche Bereich mit einem umfangsveränderten Gegenbereich des Kopplergehäuses zusammenwirkt. Der umfangsveränderte Gegenbereich des Kopplergehäuses ist dabei das maßgebliche, das variable Übersetzungsverhältnis bestimmende Bauteil, an das sich der umfangsveränderliche Bereich des Stellkolbens und/oder des Betätigungskolbens anpasst.

In Weiterbildung der Erfindung weist der umfangsveränderte Gegenbereich des Kopplergehäuses entlang dem gesamten Verstellweg des Stellkolbens und/oder des Betätigungskolbens eine definierte beziehungsweise festgelegte Kontur auf. Die das Übersetzungsverhältnis festlegende Kontur kann, wie in weiterer Ausgestaltung dargestellt ist, eine trichterförmige Kontur sein, die ein sich linear änderndes Übersetzungsverhältnis definiert. Die Kontur kann aber auch eine andere designorientierte Geometrie aufweisen, die eine nicht lineare Änderung des Übersetzungsverhältnisses bestimmt. Die designorientierte Geometrie kann beispielsweise parabelförmig ausgestaltet sein. Grundsätzlich ist aber auch jede andere Kontur bis auf Sprünge denkbar.

In weiterer Ausgestaltung der Erfindung erstreckt sich der umfangsveränderte Gegenbereich des Kopplergehäuses entlang des vollständigen Verstellweges des Stellkolbens und/oder des Betätigungskolbens. Diese Ausgestaltung stellt sicher, dass das Übersetzungsverhältnis über den gesamten Verstellweg entsprechend den Erfordernissen variabel ist. In diesem Zusammenhang ist darauf hinzuweisen, dass in einer ersten Ausgestaltungsform der Erfindung der mit dem Kopplerraum zusammenwirkende Bereich entweder des Stellkolbens oder des Betätigungskolbens umfangsveränderlich ist, oder aber in einer zweiten Ausführungsform der Erfindung sowohl der Bereich des Stellkolbens als auch des Betätigungskolbens umfangsveränderlich sind. Mit der zweiten Ausführungsform lassen sich besondere Kriterien hinsichtlich eines gewünschten Kraftverlaufs einstellen beziehungsweise erfüllen.

In Weiterbildung der Erfindung ist der umfangsveränderliche Bereich des Stellkolbens und/oder des Betätigungskolbens ein verformbarer Endbereich. Verformbar heißt in diesem Zusammenhang, dass der Endbereich zwischen zwei Grenzwerten sich stufenlos und selbständig ausdehnt und stauchbar beziehungsweise zusammenpressbar ist.

In weiterer Ausgestaltung der Erfindung ist der Werkstoff des verformbaren, also dehnfähigen oder stauchbaren, Endbereichs verschieden zu einem Basiswerkstoff des Kolbens und/oder des Betätigungskolbens. Beispielsweise ist der Basiswerkstoff ein metallischer Werkstoff, während der Werkstoff des verformbaren Endbereichs ein gummiförmiger Werkstoff ist. Es kann aber auch im Rahmen der Erfindung der verformbare Endbereich dreidimensional lamellenförmig ausgebildet sein, wobei die Lamellen durch eine entsprechende Verstellung zueinander der umfangsveränderten Kontur des Kopplergehäuses folgen. Um eine spaltfreie Oberfläche gegenüberliegend zu dem Kopplergehäuse darzustellen, können die Lamellen mit einem elastischen, abdichtenden Material beschichtet sein.

In weiterer Ausgestaltung der Erfindung weist der Stellkolben und/oder der Betätigungskolben einen Stufenabsatz auf, auf den ein verformbarer Ringabschnitt ausgesetzt ist. Diese Ausgestaltung bietet sich für eine einfache Realisierung des umfangsveränderlichen Bereichs an. Der verformbare Bereich kann aber auch aus einer Kreisplatte bestehen, die am Ende des Stellkolbens und/oder des Betätigungskolbens angebracht, beispielweise geklebt ist. Auch diese Ausgestaltung ist einfach umsetzbar.

In Weiterbildung der Erfindung ist der Koppler Teil eines Kraftstoffeinspritzsystems, insbesondere eines Kraftstoffinjektors. Grundsätzlich ist der hydraulische Koppler bei allen Anwendungen, bei denen eine variable Übersetzung gefragt ist, einsetzbar. Bevorzugt ist aber die Anwendung bei einem Kraftstoffinjektor, weil bei einem solchen Kraftstoffinjektor das stufenlos variable Übersetzungsverhältnis besonders vorteilhaft einsetzbar ist. Beispielsweise ist bei einem Kraftstoffinjektor dann eine Hubvergrößerung einer Düsennadel möglich und darüber hinaus ist eine vollständige Entdrosselung der Düse möglich.

Weitere vorteilhafte Ausgestaltungen der Erfindung sind der Zeichnungsbeschreibung zu entnehmen, in der in den Zeichnungen dargestellte Ausführungsbeispiele der Erfindung näher beschrieben sind.

### Kurze Beschreibung der Zeichnungen

Es zeigen:
- Figur 1: einen vereinfachten Längsschnitt durch einen Kraftstoffinjektor mit einem herkömmlich ausgebildeten hydraulischen Koppler,
- Figur 2a, 2b: einen Längsschnitt durch einen hydraulischen Koppler mit zwei Endstellungen eines Stellkolbens,
- Figur 3: einen Längsschnitt durch einen hydraulischen Koppler mit einer designoptimierten Führung des Stellkolbens in dem Kopplergehäuse und
- Figur 4: zeigt ein Kraft(F), Hub(h)-Diagramm mit einer Darstellung einer auf ein Ventilschließglied aufzubringenden hydraulischen Öffnungskraft.

### Ausführungsformen der Erfindung

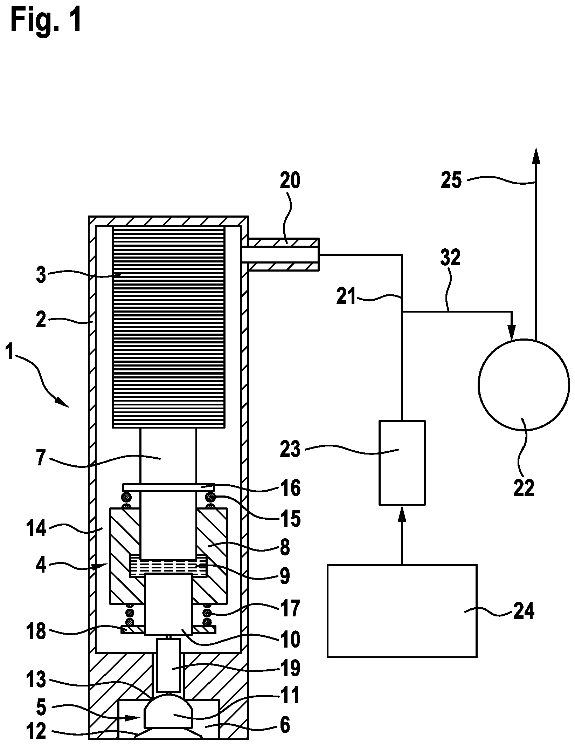

Figur 1 zeigt einen Teil eines Kraftstoffeinspritzsystems für eine selbstzündende Brennkraftmaschine eines Kraftfahrzeugs. Das Kraftstoffeinspritzsystem umfasst unter anderem einen teilweise dargestellten Kraftstoffinjektor 1 zum Einspritzen von Kraftstoff in einen zugeordneten Brennraum einer Brennkraftmaschine. Der Kraftstoffinjektor 1 weist ein Injektorgehäuse 2 auf, in dem ein Aktor 3, ein hydraulischer Koppler 4 und ein Ventil 5 als wesentliche Bauteile eingebaut sind. Dabei umfasst das Ventil einen Steuerraum 6, der mit unter Hochdruck stehendem Kraftstoff befüllt ist. Wird der Kraftstoffdruck in dem Steuerraum 6 abgesenkt, hebt eine mit dem Steuerraum 6 direkt zusammenwirkende und in axialer Verlängerung des Injektorgehäuses 2 angeordneten Düsennadel von einem Düsennadelsitz in einem Düsennadelkörper ab und unter Hochdruck stehender Kraftstoff, der insbesondere aus einem Hochdruckspeicher des Kraftstoffeinspritzsystems zugeführt wird, kann durch Düsenöffnungen in dem Düsennadelkörper in zugeordnete Brennräume der Brennkraftmaschine eingespritzt werden. Wird der Kraftstoffdruck in dem Steuerraum 6 wieder erhöht, wird die Düsennadel wieder in den Düsennadelsitz bewegt und die Einspritzung von Kraftstoff ist beendet. Das Kraftstoffeinspritzsystem kann aber auch ein direktschaltendes System sein, bei dem kein Ventil 5 vorhanden ist und stattdessen die Düsennadel direkt mit einem Betätigungskolben 10 des Kopplers 4 zusammenwirkt beziehungsweise der Betätigungskolben 10 das Ende der Düsennadel ist.

Bei Vorhandensein des Ventils 5 wird die Steuerung der Düsennadel von dem Ventil 5 vorgenommen, wobei das Ventil 5 von dem Aktor 3 über den hydraulischen Koppler 4 betätigt wird. Dazu wirkt der Aktor 3, der bei einer Bestromung eine axiale Längung erfährt, mit einem Stellkolben 7 zusammen, der mit seinem von dem Aktor 3 wegweisenden Ende in den hydraulischen Koppler 4 hinein ragt. Der hydraulische Koppler 4 weist ein Kopplergehäuse 8 und einen Kopplerraum 9 auf, wobei auf der gegenüber liegenden Seite zu dem Stellkolben 7 der Betätigungskolben 10 in das Kopplergehäuse 8 hinein ragt. Der Betätigungskolben 10 wirkt mit einem in dem Injektorgehäuse 2 geführten Führungskolben 19 zusammen, der seinerseits mit einem Ventilschließglied 11 des Ventils 5 zusammenwirkt. Das Ventilschließglied 11 wird von einer beispielsweise als Tellerfeder ausgebildeten Feder 12 gegen einen Ventilsitz 13 gedrückt. Im Ruhezustand sitzt das Ventilschließglied 11 in dem Ventilsitz 13 und eine Strömungsverbindung von dem Steuerraum 6 über Strömungsverbindungen entlang des Ventilschließgliedes 11 zu einem Systemraum 14 ist unterbunden. Wird dagegen der Aktor 3 bestromt, wird der Stellkolben 7 axial nach unten bewegt und überträgt über den hydraulischen Koppler 4 die Bewegung auf den Betätigungskolben 10, der über den Führungskolben 19 das Ventilschließglied 11 aus dem Ventilsitz 13 drückt, so dass in dem Steuerraum 6 befindlicher Kraftstoff entlang dem Betätigungskolben 10 in den Systemraum 14 abströmt. Dadurch wird der Kraftstoffdruck in dem Steuerraum abgesenkt und es wird die zuvor beschriebene Öffnungsstellung der Düsennadel bewirkt.

Der Stellkolben 7 ist mittels einer Schraubenfeder 15, welche an einer mit dem Stellkolben 7 verbundenen Stützplatte 16 angreift und sich an dem Kopplergehäuse 8 abstützt, in Richtung des Aktors 3 vorgespannt. Ebenso ist der Betätigungskolben 10 mittels einer Schraubenfeder 17, die sich ebenfalls an dem Kopplergehäuse 8 und einer weiteren an dem Betätigungskolben 10 befestigten Stützplatte 18 in Richtung zu dem Führungskolben 19 vorgespannt.

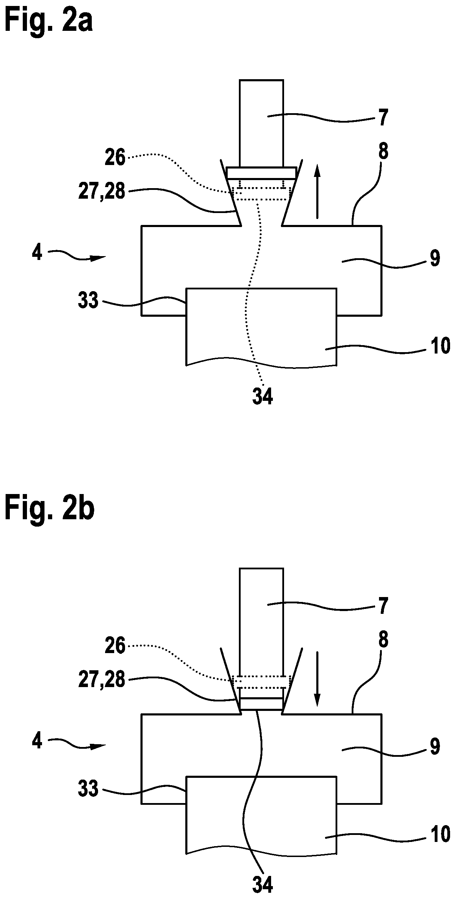

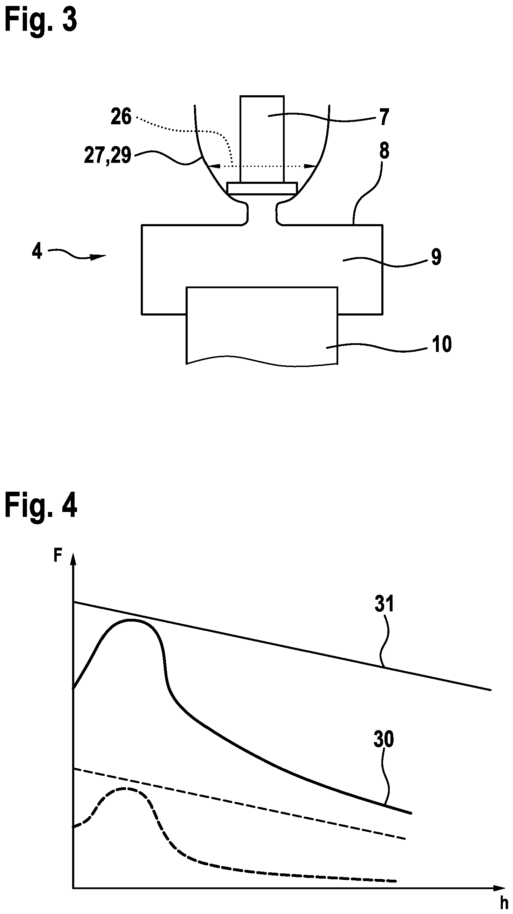

Um das erfindungsgemäße stufenlos variable Übersetzungsverhältnis des hydraulischen Kopplers zu erreichen, weisen der Stellkolben 7 und der Betätigungskolben 10 zunächst einmal unterschiedliche Durchmesser auf, wobei darüber hinaus der Stellkolben 7 und/oder der Betätigungskolben 10 - wie in den Figuren 2a, 2b und 3 dargestellt ist - mit dem in den Kopplerraum 9 eintauchenden Ende umfangsveränderlich ist.

Der Systemraum 14 ist über einen Ausgang 20 in dem Injektorgehäuse 2 mit einer Niederdruckleitung 21 verbunden, die über eine Zuleitung 32 in eine Hochdruckpumpe 22 einmündet. Gleichzeitig wird über die Niederdruckleitung 21 von einer Niederdruckpumpe 23 Kraftstoff aus einem Tank 24 in den Pumpenraum der Hochdruckpumpe 22 eingebracht. Die Hochdruckpumpe 22 fördert über ein Hochdruckpumpenelement zugemessenen Kraftstoff in eine Hochdruckleitung 25, die mit dem Hochdruckspeicher verbunden ist.

Figur 2a und 2b zeigen in vereinfachter Darstellung den hydraulischen Koppler 4 in einer ersten Ausführungsform, wobei der Betätigungskolben 10 mit einem Endbereich 33 in den Kopplerraum 9 eintaucht und ein umfangsveränderlicher Bereich 26 des Stellkolbens 7 mit einem umfangsveränderten Gegenbereich 27 des Kopplergehäuses 8 zusammenwirkt, wobei insbesondere die Stirnseite 34 des umfangsveränderlichen Bereichs des Stellkolbens 7 mit dem Kopplerraum 9 zusammenwirkt beziehungsweise mit dem in dem Kopplerraum 9 befindlichen Fluid, insbesondere Kraftstoff, in Verbindung steht. Dabei weist der umfangsveränderte Gegenbereich 27 des Kopplergehäuses 8 eine trichterförmige Kontur 28 auf.

Figur 2a zeigt, wie bei einer durch einen Aufwärtspfeil dargestellten Aufwärtsbewegung der umfangsveränderliche Bereich 26 des Stellkolbens 7 sich der trichterförmigen Kontur 28 durch eine Umfangsvergrößerung anpasst, während bei der in Figur 2b durch einen Abwärtspfeil dargestellten Abwärtsbewegung der umfangsveränderliche Bereich 26 des Stellkolbens 7 durch Eintauchen in die trichterförmige Kontur 28 des Kopplergehäuses 8 eine Querschnittsverringerung erfährt. Durch diese trichterförmige Kontur 28 wird ein stufenlos variables Übersetzungsverhältnis zwischen zwei Grenzwerten mit einer linearen Kennlinie zwischen den zwei dargestellten Endstellungen des Stellkolbens 7 erreicht.

Figur 3 zeigt in einer ähnlichen Darstellung zu Figur 2a, 2b eine designoptimierte Kontur 29 des Gegenbereichs 27 des Kopplergehäuses 8 mit dem hiermit zusammenwirkenden und durch einen Doppelpfeil (schematisch) dargestellten umfangsveränderlichen Bereich 26 des Stellkolbens 7. Die designoptimierte Kontur 29 des Gegenbereichs 27 ist bei diesem Ausführungsbeispiel parabelförmig gestaltet, es kann aber auch jede andere Kontur (bis auf Sprünge) verwirklicht sein. Durch die beispielsweise parabelförmige Ausgestaltung wird ein stufenlos variables Übersetzungsverhältnis zwischen zwei Grenzwerten mit einer nichtlinearen Kennlinie zwischen den Endstellungen des Stellkolbens 7 erreicht.

Figur 4 zeigt ein Kraft(F), Hub(h)-Diagramm, in dem die ausgezogene Kennlinie 30 die Kraft bezeichnet, die bei Ausbildung des Kraftstoffinjektors 1 als Direktschalter direkt auf die Düsennadel aufgebracht werden muss, um diese zu öffnen. Für den Fall, dass der Kraftstoffinjektor 1 Servo-Injektor ist, bezeichnet die ausgezogene Kennlinie 30 die hydraulische Kraft, die auf ein Ventilschließglied 11 aufgebracht werden muss, um dieses und damit auch die Düsennadel zu öffnen. Diese Kraft steigt beim Beispiel des Direktschalters zunächst bei einem vorgegebenen Betriebsdruck von einer Ausgangskraft bis zur Erreichung einer Maximalkraft (Losbrechkraft des Ventilschließglieds 11 aus dem Ventilsitz 13) an, um dann kontinuierlich mit einem weiteren Öffnungshub des Ventilschließgliedes 11 abzunehmen. Die gerade, abfallende Kennlinie 31 gibt in einer vereinfachten Darstellung die abnehmende Kraft wieder, die von dem Aktor 3 unter Einbezug des linear veränderten (variablen) Übersetzungsverhältnisses des hydraulischen Kopplers 4 aufgebracht werden muss beziehungsweise aufgebracht wird. Die Kennlinie 31 kann durch Variation des Übersetzungsverhältnisses weiter an dem Verlauf der Kennlinie 30 angepasst werden. Bei einem niedrigen Betriebsdruck sind die Kennlinien 30, 31 wie im unteren Teil des Diagramms strichliniert dargestellt, ausgebildet. Im Ergebnis wird durch die dargestellte Ausbildung des hydraulischen Kopplers 4 von dem Aktor 3 aufzubringende Energie eingespart, indem nur die notendige Kraft zur Verfügung gestellt wird, die auch tatsächlich zur Darstellung der entsprechenden (Öffnungs)-Bewegung benötigt wird. Somit wird die Effizienz des Gesamtsystems gesteigert.

## Patentansprüche

1. Hydraulischer Koppler (4) aufweisend einen mit einem Aktor (3) zusammenwirkenden Stellkolben (7) und einem über einen fluidgefüllten, in einem Kopplergehäuse (8) angeordneten Kopplerraum (9) mit dem Stellkolben (7) über ein einstellbares Übersetzungsverhältnis wirkverbundenen Betätigungskolben (10),
**dadurch gekennzeichnet, dass** das Übersetzungsverhältnis zwischen zwei Grenzwerten stufenlos variabel ist und der Stellkolben (7) und/oder der Betätigungskolben (10) an dem mit dem Kopplerraum (9) zusammenwirkenden Bereich (26) umfangsveränderlich ist, und dass der umfangsveränderliche Bereich (26) mit einem umfangsveränderten Gegenbereich (27) des Kopplergehäuses (8) zusammenwirkt.

2. Hydraulischer Koppler (4) nach Anspruch 1,
**dadurch gekennzeichnet, dass** der umfangsveränderte Gegenbereich (27) des Kopplergehäuses (8) entlang des Verstellweges des Stellkolbens (7) und/oder des Betätigungskolbens (10) eine definierte Kontur aufweist.

3. Hydraulischer Koppler (4) nach Anspruch 1 oder 2,
**dadurch gekennzeichnet, dass** der umfangsveränderte Gegenbereich (27) eine trichterförmige Kontur (28) aufweist.

4. Hydraulischer Koppler (4) nach einem der Ansprüche 1 bis 3,
**dadurch gekennzeichnet, dass** sich der umfangsveränderte Gegenbereich (27) des Kopplergehäuses (8) entlang des Verstellwegs des Stellkolbens (7) und/oder des Betätigungskolbens (10) erstreckt.

5. Hydraulischer Koppler (4) nach einem der vorherigen Ansprüche,
**dadurch gekennzeichnet, dass** der umfangsveränderliche Bereich (26) des Stellkolbens (7) und/oder des Betätigungskolbens (10) ein verformbarer Endbereich ist.

6. Hydraulischer Koppler (4) nach Anspruch 5,
**dadurch gekennzeichnet, dass** der Werkstoff des verformbaren Endbereichs verschieden zu einem Basiswerkstoff des Stellkolbens (7) und/oder des Betätigungskolbens (10) ist.

7. Hydraulischer Koppler (4) nach Anspruch 5 oder 6,
**dadurch gekennzeichnet, dass** der Stellkolben (7) und/oder der Betätigungskolben (10) einen Stufenabsatz aufweist, auf dem ein verformbarer Ringabschnitt aufgesetzt ist.

8. Hydraulischer Koppler (4) nach Anspruch 5 oder 6,
**dadurch gekennzeichnet, dass** der verformbare Endbereich eine Kreisplatte ist, die an dem Stellkolben (7) und/oder der Betätigungskolben (10) angebracht ist.

9. Hydraulischer Koppler (4) nach einem der vorherigen Ansprüche,
**dadurch gekennzeichnet, dass** der Koppler (4) Teil eines Kraftstoffeinspritzsystems, insbesondere eines Kraftstoffinjektors ist.

10. Verfahren zum Betreiben eines hydraulischen Kopplers (4) nach Anspruch 1,
**dadurch gekennzeichnet, dass** das Übersetzungsverhältnis zwischen zwei Grenzwerten in Abhängigkeit einer aufzubringenden Kraft über den Hub des Kopplers (4) einstellbar ist.

## Claims

1. Hydraulic coupler (4) having a control piston (7), which interacts with an actuator (3), and having an actuation piston (10), which is operatively connected to the control piston (7) with an adjustable transmission ratio via a fluid-filled coupler chamber (9) arranged in the coupler housing (8),
**characterized in that** the transmission ratio is continuously variable between two limit values, and the control piston (7) and/or the actuation piston (10) is of variable circumference at the region (26) which interacts with the coupler chamber (9), and **in that** the region (26) of variable circumference interacts with a counterpart region (27) of varying circumference of the coupler housing (8).

2. Hydraulic coupler (4) according to Claim 1, **characterized in that** the counterpart region (27) of varying circumference of the coupler housing (8) has a defined contour along the adjustment travel of the control piston (7) and/or of the actuation piston (10).

3. Hydraulic coupler (4) according to Claim 1 or 2, **characterized in that** the counterpart region (27) of varying circumference has a funnel-shaped contour (28).

4. Hydraulic coupler (4) according to one of Claims 1 to 3,
**characterized in that** the counterpart region (27) of varying circumference of the coupler housing (8) extends along the adjustment travel of the control piston (7) and/or of the actuation piston (10) .

5. Hydraulic coupler (4) according to one of the preceding claims,
**characterized in that** the region (26) of variable circumference of the control piston (7) and/or of the actuation piston (10) is a deformable end region.

6. Hydraulic coupler (4) according to Claim 5,
**characterized in that** the material of the deformable end region differs from a basic material of the control piston (7) and/or of the actuation piston (10).

7. Hydraulic coupler (4) according to Claim 5 or 6,
**characterized in that** the control piston (7) and/or the actuation piston (10) has a stepped shoulder on which a deformable ring section is mounted.

8. Hydraulic coupler (4) according to Claim 5 or 6,
**characterized in that** the deformable end region is a circular plate which is mounted on the control piston (7) and/or on the actuation piston (10).

9. Hydraulic coupler (4) according to one of the preceding claims,
**characterized in that** the coupler (4) as part of a fuel injection system, in particular of a fuel injector.

10. Method for operating a hydraulic coupler (4) according to Claim 1,
**characterized in that** the transmission ratio is adjustable between two limit values, in a manner dependent on a force to be applied, by means of the stroke of the coupler (4).

## Revendications

1. Coupleur hydraulique (4) présentant un piston de réglage (7) coopérant avec un actionneur (3) et un piston d'actionnement (10) en liaison fonctionnelle par le biais d'un espace de coupleur (9) disposé dans un boîtier de coupleur (8) et rempli de fluide avec le piston de réglage (7) par le biais d'un rapport de démultiplication ajustable,
**caractérisé en ce que** le rapport de démultiplication peut varier en continu entre deux valeurs limites et le piston de réglage (7) et/ou le piston d'actionnement (10), au niveau de la région (26) coopérant avec l'espace de coupleur (9), ont une périphérie variable, et **en ce que** la région de périphérie variable (26) coopère avec une région conjuguée de périphérie variée (27) du boîtier de coupleur (8).

2. Coupleur hydraulique (4) selon la revendication 1,
**caractérisé en ce que** la région conjuguée de périphérie variée (27) du boîtier de coupleur (8) présente un contour défini le long de la course de déplacement du piston de réglage (7) et/ou du piston d'actionnement (10).

3. Coupleur hydraulique (4) selon la revendication 1 ou 2,
**caractérisé en ce que** la région conjuguée de périphérie variée (27) présente un contour en forme d'entonnoir (28).

4. Coupleur hydraulique (4) selon l'une quelconque des revendications 1 à 3,
**caractérisé en ce que** la région conjuguée de périphérie variée (27) du boîtier de coupleur (8) s'étend le long de la course de déplacement du piston de réglage (7) et/ou du piston d'actionnement (10).

5. Coupleur hydraulique (4) selon l'une quelconque des revendications précédentes,
**caractérisé en ce que** la région de périphérie variable (26) du piston de réglage (7) et/ou du piston d'actionnement (10) est une région d'extrémité déformable.

6. Coupleur hydraulique (4) selon la revendication 5,
**caractérisé en ce que** le matériau de la région d'extrémité déformable est différent d'un matériau de base du piston de réglage (7) et/ou du piston d'actionnement (10).

7. Coupleur hydraulique (4) selon la revendication 5 ou 6,
**caractérisé en ce que** le piston de réglage (7) et/ou le piston d'actionnement (10) présentent un épaulement en gradin sur lequel est posée une portion annulaire déformable.

8. Coupleur hydraulique (4) selon la revendication 5 ou 6,
**caractérisé en ce que** la région d'extrémité déformable est une plaque circulaire qui est montée sur le piston de réglage (7) et/ou sur le piston d'actionnement (10).

9. Coupleur hydraulique (4) selon l'une quelconque des revendications précédentes,
**caractérisé en ce que** le coupleur (4) fait partie d'un système d'injection de carburant, en particulier d'un injecteur de carburant.

10. Procédé pour faire fonctionner un coupleur hydraulique (4) selon la revendication 1,
**caractérisé en ce que** le rapport de démultiplication entre deux valeurs limites peut être ajusté en fonction d'une force à appliquer par le biais de la course du coupleur (4).
